# EUROPEAN PATENT SPECIFICATION

(11) **EP 3 764 000 B1**
(45) Date of publication and mention of the grant of the patent: **22.01.2025**
(21) Application number: 20185095.5
(22) Date of filing: 09.07.2020
(51) Int. Cl.: G01K 3/10, F24C 7/08, G01K 15/00

(54) **COOKING APPLIANCE, AND HEATING CONTROL METHOD AND APPARATUS THEREFOR**
KOCHGERÄT UND ERWÄRMUNGSSTEUERUNGSVERFAHREN UND -VORRICHTUNG DAFÜR
APPAREIL DE CUISSON ET PROCÉDÉ DE COMMANDE DE CHAUFFAGE ET APPAREIL CORRESPONDANT

(30) Priority: 10.07.2019 CN 201910620225
(43) Date of publication of application: 13.01.2021
(73) Proprietor: Foshan Shunde Midea Electrical Heating Appliances Manufacturing Co., Ltd., Foshan, Guangdong 528311 (CN)
(72) Inventor: GU, Qingsong, Foshan, Guangdong 528311 (CN); MA, Baizhong, Foshan, Guangdong 528311 (CN); REN, Pengbo, Foshan, Guangdong 528311 (CN); CAI, Guohao, Foshan, Guangdong 528311 (CN); LIANG, Mengjie, Foshan, Guangdong 528311 (CN)
(74) Representative: RGTH

(56) References cited:
- EP-A2- 1 213 542
- FR-A1- 2 999 286
- US-A- 4 788 398
- US-A1- 2014 297 056

## Description

### FIELD

The present disclosure relates to the technical field of household appliances, in particular to a cooking appliance, a heating control method and apparatus therefor.

### BACKGROUND

In the related art, it generally requires a heating device to heat a cooking appliance for achieving cooking during operation. In the process of heating the cooking appliance, a temperature sensor is often used to detect a temperature in a cooking chamber defined by an inner pot in the cooking appliance, and the temperature in the cooking chamber is used as criteria for turning the heating device on or off. However, when the temperature sensor is abnormal, it is impossible to control to heat the cooking appliance effectively, resulting in continuous heating of the cooking appliance, which may be at a risk of causing a fire.

US 4788398 A provides a "temperature sensor failure detection arrangement" which would ensure the sensed temperature of the heating unit and the corresponding count of the heater energy counter would be within their predetermined reference ranges at the same time. Otherwise an "abnormal operating condition" is to be established, and the heating unit will remain de-energized until power is removed.

US 2014297056 discloses a temperature controller configured to control the difference between the temperature detected in a heated body and the target temperature to always be near zero. An abnormal event would be established if the difference isn't near zero and exceeds a threshold value for a preset time period. The temperature controller would stop supplying power once the abnormal event is established.

The conditional test adopted by the method in FR 2999286 A1 bases on the idea that the temperature sensor is working normally as long as the reading of temperature inside the chamber would change after the elapse of a period in which the temperature is expected to change. But before an abnormal status is finally established, multiple conditional tests based on the same idea can be carried out.

### SUMMARY

Embodiments of the present disclosure seek to solve at least one of the problems existing in the related art to a certain extend.

To this end, a first object of the present invention is to provide a heating control method for a cooking appliance, which is capable of heating the cooking appliance effectively, thus avoiding the cooking appliance from being heated continuously.

A second object of the present invention is to provide a heating control apparatus for a cooking appliance.

A third object of the present invention is to provide a cooking appliance.

A fourth object of the present invention is to provide electronic equipment.

A fifth object of the present invention is to provide a computer readable storage medium.

To achieve the above objects, in a first aspect, the present disclosure provides in embodiments a heating control method for a cooking appliance, including:
controlling a heating device to start heating the cooking appliance;
identifying that a heating time period of the heating device is greater than or equal to a first preset time period;
acquiring a first changed value of a target parameter of the cooking appliance within the heating time period; and
controlling the heating device based on the first changed value.

According to the present invention, controlling the heating device based on the first changed value includes:
detecting and determining that the first changed value is less than or equal to a first preset threshold value, controlling the heating device to stop heating the cooking appliance;
detecting and determining that the first changed value is greater than the first preset threshold value, controlling the heating device to continue heating the cooking appliance.

According to the present invention, after controlling the heating device to stop heating the cooking appliance, the heating control method further includes:
identifying that a heating-stop time period of the heating device is greater than or equal to a second preset time period;
acquiring a second changed value of the target parameter of the cooking appliance within the heating-stop time period; and
re-controlling the heating device based on the second changed value.

According to the present invention, re-controlling the heating device based on the second changed value includes:
detecting and determining that the second changed value is less than or equal to a second preset threshold value, controlling the heating device to continue to stop heating the cooking appliance;
detecting and determining that the second changed value is greater than the second preset threshold value, controlling the heating device to re-heat the cooking appliance.

In an embodiment, the heating control method further includes:
identifying that the first changed value is greater than the first preset threshold value, controlling to clear the heating time period; and/or
identifying that the second changed value is greater than the second preset threshold value, controlling to clear the heating-stop time period.

In an embodiment, the heating control method further includes:
controlling the cooking appliance to prompt an abnormal alarm after the heating device stops heating.

According to the invention, the target parameter includes a temperature and/or a pressure in a cooking chamber of the cooking appliance.

According to the invention, the heating control method for a cooking appliance can control the heating device based on the changed value of the target parameter of the cooking appliance within a certain heating time period in the process of heating the cooking appliance by the heating device, such that the changed value of the target parameter is closely related to the control of the heating device, thereby achieving effective control of heating the cooking appliance, thus avoiding the cooking appliance from the continuous heating which may be at a risk of causing a fire.

In a second aspect, the present disclosure provides in embodiments a heating control apparatus for a cooking appliance, including:
a first controlling module, configured to control a heating device to start heating the cooking appliance;
an identifying module, configured to identify that a heating time period of the heating device is greater than or equal to a first preset time period;
an acquiring module, configured to acquire a first changed value of a target parameter of the cooking appliance within the heating time period; and
a second controlling module, configured to control the heating device based on the first changed value.

According to embodiments of the present disclosure, the second controlling module is also configured to
detect and determine that the first changed value is less than or equal to a first preset threshold value, control the heating device to stop heating the cooking appliance;
detect and determine that the first changed value is greater than the first preset threshold value, control the heating device to continue heating the cooking appliance.

In an embodiment, the second controlling module is also configured to
identify that a heating-stop time period of the heating device is greater than or equal to a second preset time period;
acquire a second changed value of the target parameter of the cooking appliance within the heating-stop time period; and
re-control the heating device based on the second changed value.

In an embodiment, the second controlling module is also configured to
detect and determine that the second changed value is less than or equal to a second preset threshold value, control the heating device to continue to stop heating the cooking appliance;
detect and determine that the second changed value is greater than the second preset threshold value, control the heating device to re-heat the cooking appliance.

In an embodiment, the second controlling module is also configured to
identify that the first changed value is greater than the first preset threshold value, control to clear the heating time period; and/or
identify that the second changed value is greater than the second preset threshold value, control to clear the heating-stop time period.

In an embodiment, the second controlling module is also configured to
control the cooking appliance to prompt an abnormal alarm after the heating device stops heating.

According to the invention, the target parameter includes a temperature and/or a pressure in a cooking chamber of the cooking appliance.

According to the invention, the heating control apparatus for a cooking appliance can control the heating device based on the changed value of the target parameter of the cooking appliance within a certain heating time period in the process of heating the cooking appliance by the heating device, such that the changed value of the target parameter is closely related to the control of the heating device, thereby achieving effective control of heating the cooking appliance, thus avoiding the cooking appliance from the continuous heating which may be at a risk of causing a fire.

In a third aspect, the present disclosure provides in embodiments a cooking appliance, including a heating control apparatus for a cooking appliance as defined in the second aspect of embodiments.

In a fourth aspect, the present disclosure provides in embodiments electronic equipment, including a memory; and a processor,
wherein the processor executes a grogram corresponding to an executable program code by reading the executable program code stored on the memory, for implementing a heating control method for a cooking appliance as defined in the first aspect of embodiments.

In a fifth aspect, the present disclosure provides in embodiments a computer readable storage medium having stored therein a computer program that, when executed by a processor, implements a heating control method for a cooking appliance as defined in the first aspect of embodiments.

### BRIEF DESCRIPTION OF THE DRAWINGS

Fig. 1 is a flow chart showing a heating control method for a cooking appliance according to an embodiment of the present disclosure;
Fig. 2 is a flow chart showing steps of controlling a heating device based on a first changed value in a heating control method for a cooking appliance according to an embodiment of the present disclosure;
Fig. 3 is a flow chart showing steps of re-controlling a heating device in a heating control method for a cooking appliance according to an embodiment of the present disclosure;
Fig. 4 is a flow chart showing steps of re-controlling a heating device based on a second changed value in a heating control method for a cooking appliance according to an embodiment of the present disclosure;
Fig. 5 is a flow chart showing controlling steps in a heating control method for a cooking appliance according to an embodiment of the present disclosure;
Fig. 6 is a schematic diagram showing a heating control apparatus for a cooking appliance according to an embodiment of the present disclosure;
Fig. 7 is a schematic diagram showing a cooking appliance according to an embodiment of the present disclosure;

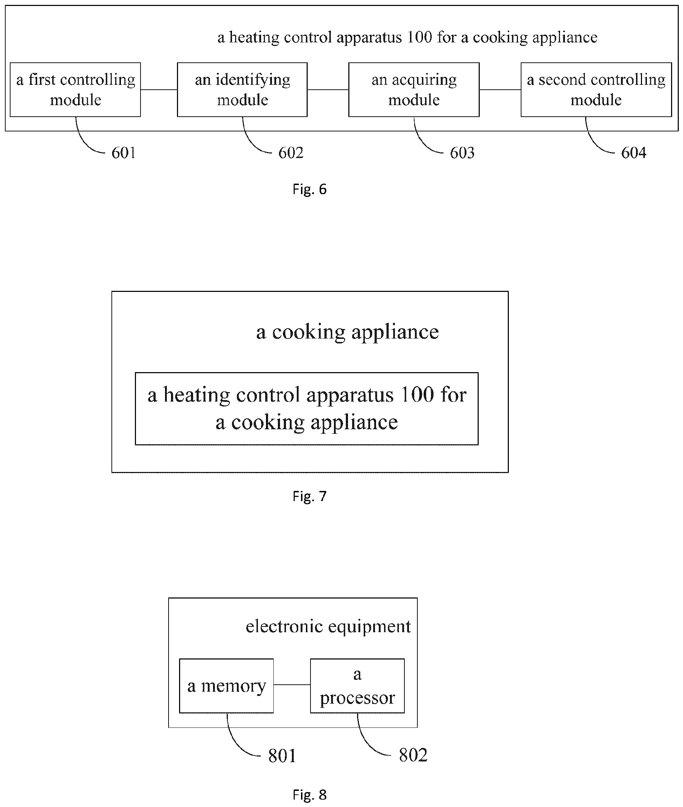

Fig. 7 is a schematic diagram showing electronic equipment according to an embodiment of the present disclosure.

### DETAILED DESCRIPTION

Descriptions will be made in detail to embodiments of the present disclosure, examples of the embodiments are shown in drawings, in which the same or similar elements and the elements having same or similar functions are denoted by like reference numerals throughout the descriptions. The embodiments described herein with reference to drawings are explanatory, are intended to illustrate the present disclosure, and are not construed to limit the present disclosure.

A cooking appliance and a heating control method and apparatus therefor according to embodiments of the present disclosure are described in details below with reference to drawings.

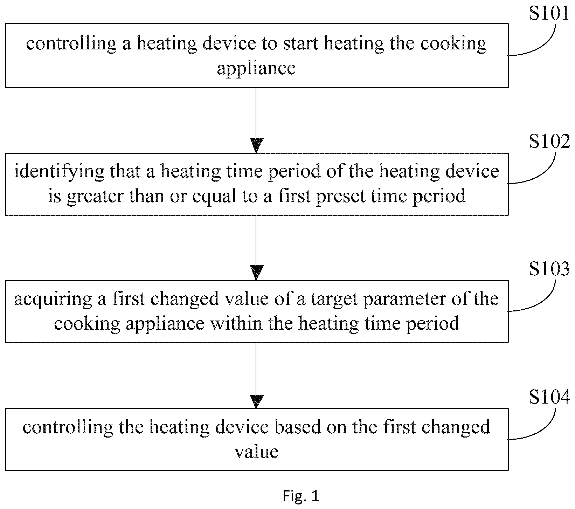

Fig. 1 is a flow chart showing a heating control method for a cooking appliance according to an embodiment of the present disclosure. As shown in Fig. 1, in an embodiment of the present disclosure, the heating control method for a cooking appliance includes the following steps S101 to S104.

At S101, a heating device is controlled to start heating the cooking appliance.

It should be noted that the heating device may be integrated in a cooking appliance or may be a separate entity, which is not limited herein.

In the case that the heating device is integrated in a cooking appliance, it may be a heating tube, a heating coil, etc. The cooking appliance may be, but not limited to an electric cooker, an electric chafing dish, etc. When turning on the heating device, the cooking appliance can respond to a user's operation of an operating component of the cooking appliance, and control to turn on the heating device according to information of the user's operation of the operating component, such that the heating device starts heating the cooking appliance.

For example, in need of turning on the heating device, a user may control a heating switch arranged at the cooking appliance or a virtual heating switch in a user's interaction interface. When a user presses the heating switch or the virtual heating switch, the cooking appliance will respond to the user's operation of the corresponding switch, that is, control to turn on the heating device.

In addition, the cooking appliance can also remotely respond to the user's operation of the cooking appliance, and control to turn on the heating device according to the information of the user's operation.

For example, the cooking appliance is connected to a remote control terminal through a wired network or a wireless network (such as WiFi, Bluetooth, etc.), and the user can issue a control instruction (such as turning on the heating device) to the cooking appliance through an application on the remote control terminal. When receiving the control instruction issued by the user, the cooking appliance will respond to the control instruction, i.e., turn on the heating device

In the case that the heating device is a separate entity, it may be an induction cooker. The cooking appliance may be, but not limited to a saute pan, a frying pan, etc. When being turned on, the heating device can directly respond to a user's operation of an operating component of the heating device, and is controlled to turn on according to information of the user's operation of the operating component, such that the heating device starts heating the cooking appliance
For example, in need of turning on the heating device, a user may control a heating switch arranged at the heating device or a virtual heating switch in a user's interaction interface. When a user presses the heating switch or the virtual heating switch, the heating device will respond to the user's operation of the corresponding switch, i.e., is controlled to turn on.

At S102, it is identified that a heating time period of the heating device is greater than or equal to a first preset time period.

After the heating device is turned on, a heating time period of the heating device can be counted by a timer. According to the time recorded by the timer, it can be identified whether the heating time period is greater than or equal to the first preset time period. When the heating time period is less than the first preset time period, the heating device is controlled to continue heating the cooking appliance; and when the heating time period is greater than or equal to the first preset time period, the following steps are executed.

At S103, a first changed value of a target parameter of the cooking appliance is acquired within the heating time period.

When the heating time period is greater than or equal to the first preset time period, a first changed value of a target parameter of the cooking appliance is acquired within the heating time period. The target parameter includes a temperature and/or a pressure in a cooking chamber of the cooking appliance.

For example, in the case that the target parameter is a temperature in the cooking chamber of the cooking appliance, a temperature sensor arranged at the cooking appliance can be used to detect an initial temperature in the cooking chamber at the start moment of heating and, when the heating time period becomes greater than or equal to the first preset time period, to detect a final temperature in the cooking chamber at the last moment of heating. Accordingly, the first changed value of the target parameter being the temperature is acquired by subtracting the initial temperature and the final temperature for the heating time period to subtraction. During the heating time period, the temperature in the cooking chamber can be detected continuously or at a predetermined time interval by the temperature sensor. In the case that the temperature in the cooking chamber is detected at a predetermined time interval by the temperature sensor, the first changed value of the target parameter being the temperature can be acquired according to an absolute difference between temperatures in the cooking chamber detected for the first time and detected in the last time interval for the heating time period. It would be understood that, in the case that the temperature in the cooking chamber is detected at the predetermined time interval, the temperature in the cooking chamber detected in every predetermined time interval can be used to calculate a difference relative to the temperature in the cooking chamber detected for the first time for the heating time period, thus continuously updating the first changed value.

While in the case that the target parameter is a pressure in the cooking chamber of the cooking appliance, a pressure sensor arranged at the cooking appliance can be used to detect an initial pressure in the cooking chamber at the start moment of heating and, when the heating time period becomes greater than or equal to the first preset time period, to detect a final pressure in the cooking chamber at the last moment of heating. Accordingly, the first changed value of the target parameter being the pressure is acquired by subtracting the initial pressure and the final pressure for the heating time period to subtraction. Besides, during the heating time period, the pressure in the cooking chamber can be detected continuously or at a predetermined time interval by the pressure sensor, which can refer to the above detection process by the temperature sensor and will not be elaborated here.

At S104, the heating device is controlled based on the first changed value
Once the first changed value is acquired, the heating device can be controlled based on the first changed value.

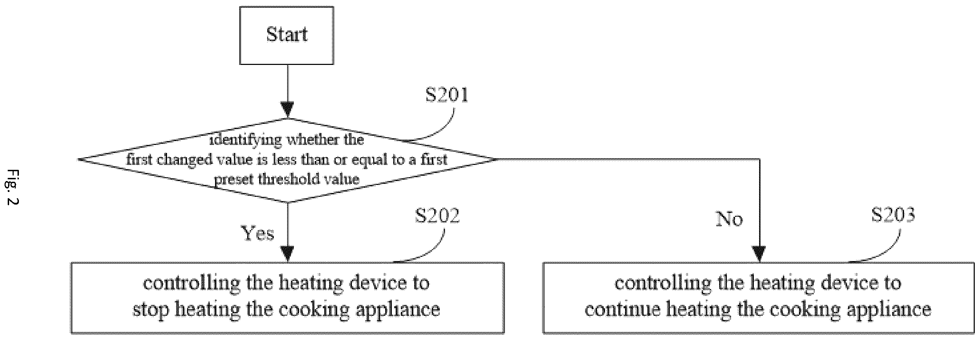

According to the present invention, the heating device is controlled according to a magnitude relationship between the first changed value and a first preset threshold value, where the heating time period corresponding to the first changed value has a one-to-one correspondence with the first preset threshold value. As shown in Fig. 2, controlling steps include S201 to S203.

At S201, it is identified whether the first changed value is less than or equal to a first preset threshold value.

The first changed value is compared with the first preset threshold value, so as to determine the magnitude relationship. When the first changed value is less than or equal to the first preset threshold value, the step S202 is executed; and when the first changed value is greater than the first preset threshold value, the step S203 is executed.

At S202, the heating device is controlled to stop heating the cooking appliance.

When the first changed value is less than or equal to the first preset threshold value, it means that the changed value of the target parameter of the cooking appliance does not reach the preset threshold value within the heating time period; when this happens, it indicates that the current device for detecting the target parameter of the cooking appliance is abnormal. At this time, in order to avoid the cooking appliance from the continuous heating which may be at a risk of causing a fire, the heating device is controlled to be turned off, that is, the heating device is controlled to stop heating the cooking appliance.

At S203, the heating device is controlled to continue heating the cooking appliance.

When the first changed value is greater than the first preset threshold value, it indicates that the current device for detecting the target parameter of the cooking appliance is normal. At this time, the heating device can be controlled to continue heating the cooking appliance.

Besides, in order to facilitate timing, when the first changed value is greater than the first preset threshold value, it can be controlled to clear the heating time period recorded.

In conclusion, the heating control method for a cooking appliance provided in the present embodiment can control the heating device based on the changed value of the target parameter of the cooking appliance within a certain heating time period in the process of heating the cooking appliance by the heating device, such that the changed value of the target parameter is closely related to the control of the heating device, thereby achieving effective control of heating the cooking appliance, thus avoiding the cooking appliance from the continuous heating which may be at a risk of causing a fire.

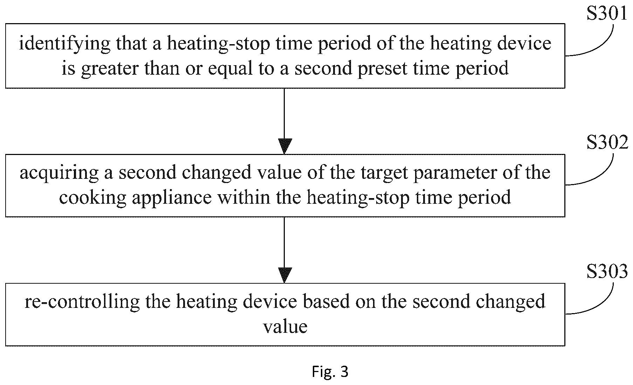

On the basis of the above embodiments, after the heating device is controlled to stop heating the cooking appliance, the heating control method further may further include re-controlling the heating device, to determine again whether the current device for detecting the target parameter of the cooking appliance is abnormal. As shown in Fig. 3, controlling steps include S301 to S303.

At S301, it is identified that a heating-stop time period of the heating device is greater than or equal to a second preset time period.

When the heating device is turned off, a heating-stop time period of the heating device can be counted by a timer. According to the time recorded by the timer, it can be identified whether the heating-stop time period is greater than or equal to a second preset time period. When the heating-stop time period is less than the second preset time, the heating device is controlled to continue to be in the off state; and when the heating-stop time period is greater than or equal to the second preset time period, the following steps are executed.

At S302, a second changed value of the target parameter of the cooking appliance is acquired within the heating-stop time period.

When the heating-stop time period is greater than or equal to the second preset time period, a second changed value of the target parameter of the cooking appliance is acquired within the heating-stop time period, where the target parameter includes a temperature and/or a pressure in a cooking chamber of the cooking appliance.

For example, in the case that the target parameter is a temperature in the cooking chamber of the cooking appliance, the temperature sensor arranged at the cooking appliance can be used to detect an initial temperature in the cooking chamber at the start moment of heating-stop and, when the heating-stop time period becomes greater than or equal to the second preset time period, to detect a final temperature in the cooking chamber at the last moment of heating-stop. Accordingly, the second changed value of the target parameter being the temperature is acquired by subtracting the initial temperature and the final temperature for the heating-stop time period to subtraction. During the heating-stop time period, the temperature in the cooking chamber can be detected continuously or at a predetermined time interval by the temperature sensor. In the case that the temperature in the cooking chamber is detected at a predetermined time interval by the temperature sensor, the second changed value of the target parameter being the temperature can be acquired according to an absolute difference between temperatures in the cooking chamber detected for the first time and detected in the last time interval for the heating-stop time period. It would be understood that, in the case that the temperature in the cooking chamber is detected at the predetermined time interval, the temperature in the cooking chamber detected in every predetermined time interval can be used to calculate a difference relative to the temperature in the cooking chamber detected for the first time for the heating-stop time period, thus continuously updating the second changed value.

While in the case that the target parameter is a pressure in the cooking chamber of the cooking appliance, the pressure sensor arranged at the cooking appliance can be used to detect an initial pressure in the cooking chamber at the start moment of heating-stop and, when the heating-stop time period becomes greater than or equal to the second preset time period, to detect a final pressure in the cooking chamber at the last moment of heating-stop. Accordingly, the second changed value of the target parameter being the pressure is acquired by subtracting the initial pressure and the final pressure for the heating-stop time period to subtraction. Besides, during the heating-stop time period, the pressure in the cooking chamber can be detected continuously or at a predetermined time interval by the pressure sensor, which can refer to the above detection process by the temperature sensor and will not be elaborated here.

At S303, the heating device is re-controlled based on the second changed value.

Once the second changed value is acquired, the heating device can be re-controlled based on the second changed value.

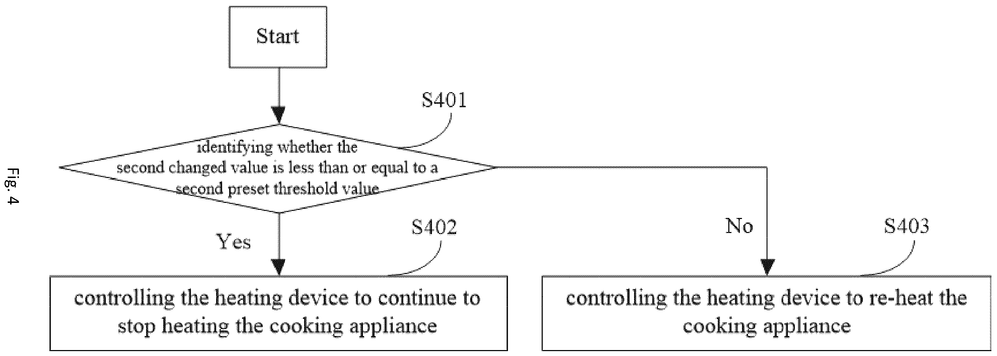

According to the present invention, the heating device is re-controlled according to a magnitude relationship between the second changed value and a second preset threshold value, where the heating-stop time period corresponding to the second changed value has a one-to-one correspondence with the second preset threshold value. As shown in Fig. 4, controlling steps include S401 to S403.

At S401, it is identified whetherthe second changed value is less than or equal to a second preset threshold value.

The second changed value is compared with the second preset threshold value, so as to determine the magnitude relationship. When the second changed value is less than or equal to the second preset threshold value, the step S402 is executed; and when the second changed value is greater than the second preset threshold value, the step S403 is executed.

At S402, the heating device is controlled to continue to stop heating the cooking appliance.

When the second changed value is less than or equal to the second preset threshold value, it means that the changed value of the target parameter of the cooking appliance does not reach the preset threshold value within the heating-stop time period; when this happens, it indicates that the current device for detecting the target parameter of the cooking appliance is abnormal. At this time, the heating device is controlled to continue to stop heating the cooking appliance.

At S403, the heating device is controlled to re-heat the cooking appliance.

When the second changed value is greater than the second preset threshold value, it indicates that the current device for detecting the target parameter of the cooking appliance is normal. At this time, the heating device can be controlled to re-heat the cooking appliance.

Besides, in order to facilitate timing, when the second changed value is greater than the second preset threshold value, it can be controlled to clear the heating-stop time period recorded.

On the basis of the above embodiments, after the heating device stops heating, the heating control method further includes controlling the cooking appliance to prompt an abnormal alarm, so as to remind the user. The abnormal alarm includes a text prompt, a sound prompt, a light prompt, etc.

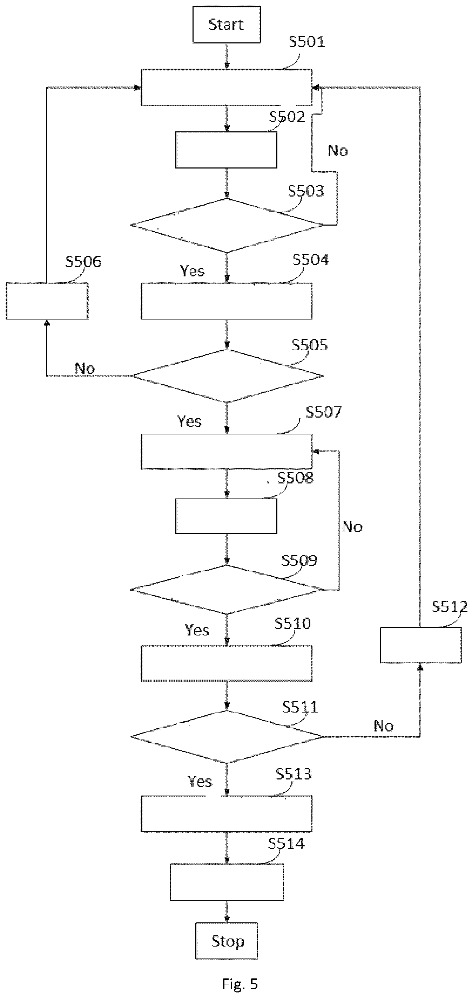

For ease of understanding, the heating control method for the cooking appliance in an embodiment is illustrated below with reference to the controlling steps in Fig. 5. As shown in Fig. 5, the controlling steps include S501 to S514.
At S501, controlling a heating device to heat a cooking appliance
At S502, timing by a timer
At S503, identifying whether a heating time period of the heating device is greater than or equal to a first preset time period, if yes, executing the step S504, otherwise returning to execute the step S501
At S504, acquiring a first changed value of a target parameter of the cooking appliance within the heating time period
At S505, identifying whether the first changed value is less than or equal to a first preset threshold value, if yes, executing the step S507, otherwise executing the step S506
At S506, clearing the timing and returning to execute the step S501
At S507, controlling the heating device to stop heating
At S508, timing by a timer
At S509, identifying whether a heating-stop time period of the heating device is greater than or equal to a second preset time period, if yes, executing the step S510, otherwise returning to execute the step S507.
At 510, acquiring a second changed value of the target parameter of the cooking appliance within the heating-stop time period
At S511, identifying whether the second changed value is less than or equal to a second preset threshold value, if yes, executing the step S513, otherwise executing the step S512
At S512, clearing the timing and returning to execute the step S501
At S513, controlling the heating device to continue to stop heating the cooking appliance
At S514, prompting an abnormal alarm

In order to achieve the above embodiment, the present disclosure further provides in embodiments a heating control apparatus for a cooking appliance.

Fig. 6 is a schematic diagram showing a heating control apparatus for a cooking appliance according to an embodiment of the present disclosure. As shown in Fig. 6, the heating control apparatus for a cooking appliance includes:
a first controlling module 601, configured to control a heating device to start heating the cooking appliance;
an identifying module 602, configured to identify that a heating time period of the heating device is greater than or equal to a first preset time period;
an acquiring module 603, configured to acquire a first changed value of a target parameter of the cooking appliance within the heating time period; and
a second controlling module 604, configured to control the heating device based on the first changed value

Further, the second controlling module 604 is also configured to
detect and determine that the first changed value is less than or equal to a first preset threshold value, control the heating device to stop heating the cooking appliance;
detect and determine that the first changed value is greater than the first preset threshold value, control the heating device to continue heating the cooking appliance.

Further, the second controlling module 604 is also configured to
identify that a heating-stop time period of the heating device is greater than or equal to a second preset time period;
acquire a second changed value of the target parameter of the cooking appliance within the heating-stop time period; and
re-control the heating device based on the second changed value.

Further, the second controlling module 604 is also configured to
detect and determine that the second changed value is less than or equal to a second preset threshold value, control the heating device to continue to stop heating the cooking appliance;
detect and determine that the second changed value is greater than the second preset threshold value, control the heating device to re-heat the cooking appliance.

Further, the second controlling module 604 is also configured to
identify that the first changed value is greater than the first preset threshold value, control to clear the heating time period; and/or
identify that the second changed value is greater than the second preset threshold value, control to clear the heating-stop time period.

Further, the second controlling module 604 is also configured to
control the cooking appliance to prompt an abnormal alarm after the heating device stops heating.

Further, the target parameter includes a temperature and/or a pressure in a cooking chamber of the cooking appliance.

It would be understood that the above heating control apparatus for a cooking appliance is used to perform the above heating control method for a cooking appliance. The corresponding program modules in the heating control apparatus have respective implementing principles and technical effects similar with the description for the above heating control method. The working process of the heating control apparatus may refer to the corresponding process of the heating control method, which will not be elaborated here.

In conclusion, the heating control apparatus for a cooking appliance provided in the present embodiment can control the heating device based on the changed value of the target parameter of the cooking appliance within a certain heating time period in the process of heating the cooking appliance by the heating device, such that the changed value of the target parameter is closely related to the control of the heating device, thereby achieving effective control of heating the cooking appliance, thus avoiding the cooking appliance from the continuous heating.

In order to achieve the above embodiments, the present disclosure also provides in embodiments a cooking appliance. As shown in Fig. 7, the cooking appliance includes a heating control apparatus 100 for a cooking appliance as aforementioned.

In order to achieve the above embodiments, the present disclosure also provides in embodiments electronic equipment. As shown in Fig. 8, the electronic equipment includes a memory 801; and a processor 802, wherein the processor 802 executes a grogram corresponding to an executable program code by reading the executable program code stored on the memory 801, for implementing the steps of the heating control method for a cooking appliance as aforementioned.

In order to achieve the above embodiments, the present disclosure also provides in embodiments a computer readable storage medium having stored therein a computer program that, when executed by a processor, implements the steps of the heating control method for a cooking appliance as aforementioned.

In the specification, it should be understood that, the terms indicating orientation or position relationship such as "central", "longitudinal", "lateral", "length", "width", "thickness", "above", "below", "front", "rear", "right", "left", "vertical", "horizontal", "top", "bottom", "inner", "outer", "clockwise", "counter-clockwise", "axial", "radial", "circumferential" should be construed to refer to the orientation or position relationship as then described or as shown in the drawings. These terms are merely for convenience and concision of description and do not alone indicate or imply that the device or element referred to must have a particular orientation or must be configured or operated in a particular orientation. Thus, it cannot be understood to limit the present disclosure.

In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this features implicitly or explicitly. In the description of the present disclosure, "a plurality of" means two or more than two this features, unless specified otherwise.

In the present disclosure, unless specified or limited otherwise, the terms "mounted", "connected", "coupled", "fixed" and the like are used broadly, and may be, for example, fixed connections, detachable connections, or integrated connections; may also be mechanical or electrical connections; may also be direct connections or indirect connections via intervening structures; may also be inner communications of two elements or mutual interaction between two elements, which can be understood by those skilled in the art according to specific situations.

In the present disclosure, unless specified or limited otherwise, a structure in which a first feature is "on" or "below" a second feature may be an embodiment in which the first feature is in direct contact with the second feature, or an embodiment in which the first feature and the second feature are contacted indirectly via an intermediation. Furthermore, a first feature "on", "above" or "on top of" a second feature may include an embodiment in which the first feature is right or obliquely "on", "above" or "on top of" the second feature, or just means that the first feature is at a height higher than that of the second feature; while a first feature "below", "under" or "on bottom of" a second feature may include an embodiment in which the first feature is right or obliquely "below", "under" or "on bottom of" the second feature, or just means that the first feature is at a height lower than that of the second feature.

Reference throughout this specification to "an embodiment", "some embodiments", "one embodiment", "another example", "an example", "a specific example" or "some examples" means that a particular feature, structure, material, or characteristic described in connection with the embodiment or example is included in at least one embodiment or example of the present disclosure. Thus, the appearances of the phrases such as "in some embodiments", "in one embodiment", "in an embodiment", "in another example", "in an example", "in a specific example" or "in some examples", in various places throughout this specification are not necessarily referring to the same embodiment or example of the present disclosure. Furthermore, the particular features, structures, materials, or characteristics may be combined in any suitable manner in one or more embodiments or examples.

## Claims

1. A heating control method for a cooking appliance, comprising:
controlling a heating device to start heating the cooking appliance (S101);
identifying if a heating time period of the heating device is greater than or equal to a first preset time period, then the following steps are executed (S102);
acquiring a first changed value of a target parameter of the cooking appliance within the heating time period (S103); and
controlling the heating device based on the first changed value (S104);
wherein the heating time period of the heating device is recorded after the heating device starts heating the cooking appliance (S101); wherein the value of the target parameter is measured by a sensor arranged at the cooking appliance;
wherein controlling the heating device based on the first changed value (S104) comprises:
detecting and determining if the first changed value is less than or equal to a first preset threshold value, then controlling the heating device to stop heating the cooking appliance (S202);
detecting and determining if the first changed value is greater than the first preset threshold value, then controlling the heating device to continue heating the cooking appliance (S203);
wherein after controlling the heating device to stop heating the cooking appliance (S202), the heating control method further comprises:
identifying if a heating-stop time period of the heating device is greater than or equal to a second preset time period, then the following steps are executed (S301);
acquiring a second changed value of the target parameter of the cooking appliance within the heating-stop time period (S302); and
re-controlling the heating device based on the second changed value (S303);
wherein the heating-stop time period is recorded after the heating device stop heating the cooking appliance;
wherein the first changed value is an absolute difference between an initial value of the target parameter measured at the start moment of the heating time period and a subsequent value of the target parameter measured in a course of the heating time period, and the second changed value is an absolute difference between an initial value of the target parameter measured at the start moment of a heating-stop time period and a subsequent value of the target parameter measured in a course of the heating-stop time period;
wherein the target parameter comprises a temperature and/or a pressure in the cooking chamber of the cooking appliance ; and wherein re-controlling the heating device based on the second changed value (S303) comprises:
detecting and determining if the second changed value is less than or equal to a second preset threshold value, then controlling the heating device to continue to stop heating the cooking appliance (S402);
detecting and determining if the second changed value is greater than the second preset threshold value, then controlling the heating device to re-heat the cooking appliance (S403).

2. The heating control method according to claim 1, further comprising:
identifying if the first changed value is greater than the first preset threshold value, then controlling to reset the heating time period; and/or
identifying if the second changed value is greater than the second preset threshold value, then controlling to reset the heating-stop time period.

3. The heating control method according to claim 2, further comprising:
controlling the cooking appliance to prompt an abnormal alarm after the heating device continues to stop heating the cooking appliance (S402).

4. A heating control apparatus (100) for a cooking appliance configured to apply a heating control method according to any one of claims 1 to 3, the heating control apparatus (100) comprising:
a first controlling module (601), configured to control a heating device to start heating the cooking appliance (S101);
an identifying module (602), configured to identify that a heating time period of the heating device is greater than or equal to a first preset time period (S102);
an acquiring module (603), configured to acquire a first changed value of a target parameter of the cooking appliance within the heating time period (S103); and
a second controlling module (604), configured to control the heating device based on the first changed value (S104).

5. A cooking appliance, comprising a heating control apparatus (100) for a cooking appliance according to claim 4.

6. Electronic equipment, comprising:
a memory (801); and
a processor (802),
wherein the processor (802) executes a program corresponding to an executable program code by reading the executable program code stored on the memory (801), so as to implement a heating control method for a cooking appliance according to any one of claims 1 to 3.

7. A computer readable storage medium having stored therein a computer program that, when executed by a processor (802), implements a heating control method for a cooking appliance according to any one of claims 1 to 3.

## Patentansprüche

1. Heizsteuerverfahren für ein Kochgerät, umfassend:
Steuern einer Heizvorrichtung, um das Heizen des Kochgeräts zu starten (S101);
Identifizieren, ob eine Heizzeitspanne der Heizvorrichtung größer oder gleich einer ersten voreingestellten Zeitspanne ist, dann werden die folgenden Schritte ausgeführt (S102);
Erfassen eines ersten geänderten Wertes eines Zielparameters des Kochgeräts innerhalb der Heizzeitspanne (S103); und
Steuern der Heizvorrichtung auf der Grundlage des ersten geänderten Wertes (S104);
wobei die Heizzeitspanne der Heizvorrichtung aufgezeichnet wird, nachdem die Heizvorrichtung das Heizen des Kochgeräts startet (S101); wobei der Wert des Zielparameters von einem am Kochgerät angeordneten Sensor gemessen wird;
wobei das Steuern der Heizvorrichtung auf der Grundlage des ersten geänderten Wertes (S104) Folgendes umfasst:
Erkennen und Bestimmen, ob der erste geänderte Wert kleiner oder gleich einem ersten voreingestellten Schwellenwert ist, dann Steuern der Heizvorrichtung, um das Heizen des Kochgeräts zu stoppen (S202);
Erkennen und Bestimmen, ob der erste geänderte Wert größer als der erste voreingestellte Schwellenwert ist, dann Steuern der Heizvorrichtung, um das Kochgerät weiterhin zu heizen (S203);
wobei das Heizsteuerverfahren nach dem Steuern der Heizvorrichtung, um das Heizen des Kochgeräts zu stoppen (S202), ferner Folgendes umfasst:
Identifizieren, ob eine Heizstopp-Zeitspanne der Heizvorrichtung größer oder gleich einer zweiten voreingestellten Zeitspanne ist, dann werden die folgenden Schritte ausgeführt (S301);
Erfassen eines zweiten geänderten Wertes des Zielparameters des Kochgeräts innerhalb der Heizstopp-Zeitspanne (S302); und
Erneutes Steuern der Heizvorrichtung auf der Grundlage des zweiten geänderten Wertes (S303);
wobei die Heizstopp-Zeitspanne aufgezeichnet wird, nachdem die Heizvorrichtung das Heizen des Kochgeräts stoppt;
wobei der erste geänderte Wert eine absolute Differenz zwischen einem Anfangswert des Zielparameters, der zum Startzeitpunkt der Heizzeitspanne gemessen wurde, und einem nachfolgenden Wert des Zielparameters, der im Verlauf der Heizzeitspanne gemessen wurde, ist, und der zweite geänderte Wert eine absolute Differenz zwischen einem Anfangswert des Zielparameters, der zum Startzeitpunkt einer Heizstopp-Zeitspanne gemessen wurde, und einem nachfolgenden Wert des Zielparameters, der in einem Verlauf der Heizstopp-Zeitspanne gemessen wurde, ist;
wobei der Zielparameter eine Temperatur und/oder einen Druck in der Kochkammer des Kochgeräts umfasst; und wobei das erneute Steuern der Heizvorrichtung auf der Grundlage des zweiten geänderten Werts (S303) Folgendes umfasst:
Erkennen und Bestimmen, ob der zweite geänderte Wert kleiner oder gleich einem zweiten voreingestellten Schwellenwert ist, dann Steuern der Heizvorrichtung, um das Stoppen des Heizens des Kochgeräts fortzusetzen (S402);
Erkennen und Bestimmen, ob der zweite geänderte Wert größer als der zweite voreingestellte Schwellenwert ist, dann Steuern der Heizvorrichtung zum erneuten Heizen des Kochgeräts (S403).

2. Heizsteuerverfahren gemäß Anspruch 1, ferner umfassend:
Identifizieren, ob der erste geänderte Wert größer als der erste voreingestellte Schwellenwert ist, und dann Steuern, um die Heizzeitspanne zurückzusetzen; und/oder
Identifizieren, ob der zweite geänderte Wert größer ist als der zweite voreingestellte Schwellenwert, und dann Steuern, um die Heizstopp-Zeitspanne zurückzusetzen.

3. Heizsteuerverfahren gemäß Anspruch 2, ferner umfassend:
Steuern des Kochgeräts, um einen anormalen Alarm auszulösen, nachdem die Heizvorrichtung das Stoppen des Heizens des Kochgeräts fortführt (S402).

4. Heizsteuervorrichtung (100) für ein Kochgerät, das zur Anwendung eines Heizsteuerverfahrens gemäß einem der Ansprüche 1 bis 3 konfiguriert ist, wobei die Heizsteuervorrichtung (100) Folgendes umfasst:
ein erstes Steuermodul (601), das so konfiguriert ist, dass es eine Heizvorrichtung steuert, um das Heizen des Kochgeräts (S101) zu starten;
ein Identifizierungsmodul (602), das so konfiguriert ist, dass es identifiziert, dass eine Heizzeitspanne der Heizvorrichtung größer oder gleich einer ersten voreingestellten Zeitspanne (S102) ist;
ein Erfassungsmodul (603), das so konfiguriert ist, dass es einen ersten geänderten Wert eines Zielparameters des Kochgeräts innerhalb der Heizzeitspanne (S103) erfasst; und
ein zweites Steuermodul (604), das so konfiguriert ist, dass es die Heizvorrichtung auf der Grundlage des ersten geänderten Wertes (S104) steuert.

5. Kochgerät, umfassend ein Heizsteuergerät (100) für ein Kochgerät gemäß Anspruch 4.

6. Elektronische Ausrüstung, umfassend:
einen Speicher (801); und
einen Prozessor (802),
wobei der Prozessor (802) ein Programm ausführt, das einem ausführbaren Programmcode entspricht, indem er den in dem Speicher (801) gespeicherten ausführbaren Programmcode liest, um ein Heizsteuerverfahren für ein Kochgerät gemäß einem der Ansprüche 1 bis 3 zu implementieren.

7. Computerlesbares Speichermedium, aufweisend ein darauf gespeichertes Computerprogramm, das, wenn es von einem Prozessor (802) ausgeführt wird, ein Heizsteuerverfahren für ein Kochgerät gemäß einem der Ansprüche 1 bis 3 implementiert.

## Revendications

1. Méthode de contrôle du chauffage d'un appareil de cuisson, comprenant :
commander un dispositif de chauffage pour commencer à chauffer l'appareil de cuisson (S101) ;
déterminer si une période de temps de chauffage du dispositif de chauffage est supérieure ou égale à une première période prédéfinie, puis exécuter les étapes suivantes (S102) ;
acquisition d'une première valeur modifiée d'un paramètre cible de l'appareil de cuisson au cours de la période de chauffage (S103) ; et
commander le dispositif de chauffage sur la base de la première valeur modifiée (S104) ;
la période de temps de chauffage du dispositif de chauffage est enregistrée après que le dispositif de chauffage a commencé à chauffer l'appareil de cuisson (S101) ; la valeur du paramètre cible est mesurée par un capteur placé sur l'appareil de cuisson ;
dans lequel la commande du dispositif de chauffage sur la base de la première valeur modifiée (S104) comprend :
détecter et déterminer si la première valeur modifiée est inférieure ou égale à une première valeur seuil prédéfinie, puis commander le dispositif de chauffage pour arrêter de chauffer l'appareil de cuisson (S202) ;
détecter et déterminer si la première valeur modifiée est supérieure à la première valeur seuil prédéfinie, puis commander le dispositif de chauffage pour continuer à chauffer l'appareil de cuisson (S203) ;
dans lequel, après avoir commandé le dispositif de chauffage pour arrêter de chauffer l'appareil de cuisson (S202), la méthode de contrôle du chauffage comprend en outre :
déterminer si une période d'arrêt du chauffage de l'appareil de chauffage est supérieure ou égale à une deuxième période prédéfinie, puis exécuter les étapes suivantes (S301) ;
acquisition d'une deuxième valeur modifiée du paramètre cible de l'appareil de cuisson pendant la période d'arrêt du chauffage (S302) ; et
commander à nouveau le dispositif de chauffage sur la base de la deuxième valeur modifiée (S303) ;
dans lequel la période d'arrêt du chauffage est enregistrée après que le dispositif de chauffage a cessé de chauffer l'appareil de cuisson ;
la première valeur modifiée est une différence absolue entre une valeur initiale du paramètre cible mesurée au début de la période de chauffage et une valeur ultérieure du paramètre cible mesurée au cours de la période de chauffage , et la deuxième valeur modifiée est une différence absolue entre une valeur initiale du paramètre cible mesurée au début d'une période d'arrêt du chauffage et une valeur ultérieure du paramètre cible mesurée au cours de la période d'arrêt du chauffage ;
dans lequel le paramètre cible comprend une température et/ou une pression dans la chambre de cuisson de l'appareil de cuisson ; et dans lequel le nouveau contrôle du dispositif de chauffage sur la base de la seconde valeur modifiée (S303) comprend :
détecter et déterminer si la seconde valeur modifiée est inférieure ou égale à une seconde valeur seuil prédéfinie, puis commander le dispositif de chauffage pour qu'il continue d'arrêter de chauffer l'appareil de cuisson (S402) ;
détecter et déterminer si la seconde valeur modifiée est supérieure à la seconde valeur seuil prédéfinie, puis commander le dispositif de chauffage pour réchauffer l'appareil de cuisson (S403).

2. La méthode de contrôle du chauffage selon la revendication 1, comprenant en outre :
déterminer si la première valeur modifiée est supérieure à la première valeur seuil prédéfinie, puis commander la réinitialisation de la période de chauffage ; et/ou
déterminer si la seconde valeur modifiée est supérieure à la seconde valeur seuil prédéfinie, puis commander la réinitialisation de la période d'arrêt du chauffage.

3. La méthode de contrôle du chauffage selon la revendication 2, comprenant en outre :
contrôler l'appareil de cuisson pour déclencher une alarme anormale après que le dispositif de chauffage continue d'arrêter de chauffer l'appareil de cuisson (S402).

4. Appareil de contrôle du chauffage (100) pour un appareil de cuisson configuré pour appliquer une méthode de contrôle du chauffage selon l'une quelconque des revendications 1 à 3, l'appareil de contrôle du chauffage (100) comprenant :
un premier module de commande (601), configuré pour commander un dispositif de chauffage afin de commencer à chauffer l'appareil de cuisson (S101) ;
un module d'identification (602), configuré pour identifier qu'une période de chauffage de l'appareil de chauffage est supérieure ou égale à une première période prédéfinie (S102) ;
un module d'acquisition (603), configuré pour acquérir une première valeur modifiée d'un paramètre cible de l'appareil de cuisson pendant la période de chauffage (S103) ; et
un deuxième module de commande (604), configuré pour commander le dispositif de chauffage en fonction de la première valeur modifiée (S104).

5. Appareil de cuisson, comprenant un appareil de commande de chauffage (100) pour un appareil de cuisson selon la revendication 4.

6. Équipement électronique, comprenant :
une mémoire (801) ; et
un processeur (802),
dans lequel le processeur (802) exécute un programme correspondant à un code de programme exécutable en lisant le code de programme exécutable stocké dans la mémoire (801), de manière à mettre en oeuvre une méthode de contrôle du chauffage pour un appareil de cuisson selon l'une des revendications 1 à 3.

7. Support de stockage lisible par ordinateur contenant un programme d'ordinateur qui, lorsqu'il est exécuté par un processeur (802), met en oeuvre une méthode de contrôle du chauffage pour un appareil de cuisson selon l'une des revendications 1 à 3.
